# EUROPÄISCHE PATENTSCHRIFT

(11) **EP 2 647 198 B1**
(45) Veröffentlichungstag und Bekanntmachung des Hinweises auf die Patenterteilung: **01.04.2015**
(21) Anmeldenummer: 11815675.1
(22) Anmeldetag: 02.12.2011
(51) Int. Cl.: H04N 7/18, G08B 13/196, G06F 11/20

(54) **ÜBERWACHUNGSKAMERA-ANORDNUNG**
SURVEILLANCE CAMERA ARRANGEMENT
SYSTÈME DE CAMÉRA DE SURVEILLANCE

(30) Priorität: 03.12.2010 DE 102010053181
(43) Veröffentlichungstag der Anmeldung: 09.10.2013
(73) Patentinhaber: Mobotix AG, 67722 Winnweiler (DE); Hinkel, Ralf, 67724 Höringen (DE)
(72) Erfinder: HINKEL, Ralf, 67724 Höringen (DE)
(74) Vertreter: Vossius & Partner
(86) Internationale Anmeldenummer: PCT/DE2011/002067
(87) Internationale Veröffentlichungsnummer: WO 2012/095068

(56) Entgegenhaltungen:
- WO-A1-03/001809
- WO-A1-2005/027068
- WO-A1-2007/069658
- DE-A1-102006 018 959

## Beschreibung

Die vorliegende Erfindung befasst sich mit dem Betrieb von Überwachungskameras.

Bei Überwachungskameras besteht im Regelfall die Notwendigkeit, die mit den Kameras aufgenommenen Bilder beziehungsweise Bildsequenzen zumindest zeitweilig zu Sicherungs- und Dokumentationszwecken zu speichern. Eine solche Speicherung erlaubt es, in Fällen, in denen mit den Überwachungskameras ein womöglich relevantes Ereignis aufgenommen wurde, die dabei aufgenommenen Bilder nachträglich einzusehen und gegebenenfalls auszuwerten.

Die Speicherung kann einerseits in einer Zentrale erfolgen, was den Vorteil hat, dass die Daten besonders gut gegen Verlust zu sichern sind. Nachteilig ist aber, dass an einem Knoten, an den die Daten zwecks Speicherung übertragen werden, erheblich durch die Notwendigkeit, die Daten zu speichern, belastet wird.

Die Einspeicherung von Daten außerhalb einer bildaufnehmenden Videokamera ist bekannt. Verwiesen wird diesbezüglich auf die DE 10 2006 018959A1, WO 2007/069658 AI, WO 2005/027068A1 sowie die WO 03/001809A1.

Es ist ebenfalls möglich, Daten lokal auf den bildgebenden Kameras zu speichern. Dies verringert die Netzlast, bedeutet aber zugleich, dass ein Datenverlust nicht ausgeschlossen werden kann, insbesondere dort nicht, wo die Kameras widrigen Umgebungsbedingungen ausgesetzt und dadurch zerstört werden können oder Vandalismus und Diebstahl ausgesetzt sind. Es ist wünschenswert, eine erhöhte Sicherheit gegen Verlust gespeicherter Videodaten ohne eine extreme Netzbelastung an Knotenpunkten zu bewirken.

Die Aufgabe der vorliegenden Erfindung besteht darin, Neues für die gewerbliche Anwendung bereitzustellen.

Die Lösung dieser Aufgabe wird in unabhängiger Form beansprucht. Bevorzugte Ausführungsformen finden sich in den Unteransprüchen.

Damit befasst sich die vorliegende Erfindung mit einer Überwachungskamera mit einer Netzschnittstelle und einem Speichermittel zur kamerainternen Videodatenspeicherung. Hierbei ist vorgesehen, dass das Speichermittel zur Einspeicherung zu speichernder Videodaten in mindestens einer anderen, über die Schnittstelle erreichbaren Kamera und/oder für über die Netzschnittstelle von zumindest einer anderen Kamera empfangenen Videodaten ausgebildet ist.

Ein erster grundlegender Gedanke der vorliegenden Erfindung besteht somit in der Erkenntnis, dass die Sicherheit ganz einfach durch zusätzliche Datenablage außerhalb der bildaufnehmenden Kamera, aber innerhalb einer anderen Kamera, das heißt innerhalb einer Fremdkamera, erhöht werden kann, ohne die Netzlast an Knotenpunkten extrem zu erhöhen. Dabei erfolgt diese zusätzliche Datenablage in einer Fremdkamera insoweit zusätzlich, als sie zusätzlich zur Ablage in der bildaufnehmenden Kamera selbst die Daten sichert. Indem Kameras wechselseitig zur Sicherung der Videodaten einer jeweils anderen Kamera ausgebildet sind, liegt zur Sicherung immer nur zumindest weitgehend lokaler Datenverkehr vor, der nicht über einen zentralen Knoten oder dergleichen gesendet werden muss. Dies ist gerade bei verzweigten Kamerasystemen besonders vorteilhaft. Zudem haben Kameras von Überwachungssystemen ohnehin in der Regel einen Speicher für wahlweisen Zugriff, zum Beispiel einen SD-Kartenspeicher, wobei die SD-Karten bevorzugt zwar aus der Kamera entnehmbar sind, zugleich aber bevorzugt durch Datenabruf auslesbar sein sollen. Es sei erwähnt, dass andere Speicher außer SD-Karten ebenfalls verwendbar sind. Das Speichermittel dient dazu, bestimmte Datenströme aktiv einem Speicher zuzuleiten.

Videodaten werden typisch, aber nicht zwingend, neben den eigentlichen Bilddaten weitere Daten umfassen, beispielsweise den Audiodatenstrom aus typisch vorgesehenen Mikrofonen der Kameras, Zeitmarken, bei bzw. mit der Kamera registrierte Ereignisse wie Erschütterungen, GPS-Daten usw. Es sei im übrigen erwähnt, dass die Daten allein oder gemeinsam komprimiert sein können, zum Beispiel mit herkömmlichen Codecs. Es ist dabei später auch möglich, bei komprimierten Daten zur Decodierung gegebenenfalls auf Daten aus verschiedenen Kameras zurückzugreifen, etwa wenn eine Differenzspeicherung von Bildern erfolgt und in einem Speicher nur noch der Referenzframe vorliegt, während aus anderen Kameras nur die darauf bezogenen Differenzdaten verfügbar sind.

In Systemen, in denen mehr als zwei Kameras vorgesehen sind, die wechselseitig Videodaten speichern können, werden in einer bevorzugten Variante erfindungsgemäß Mittel zur Auswahl einer oder mehrerer Fremdkameras, in denen eigene Bilder (zusätzlich) gespeichert werden, vorgesehen. Diese Mittel sind typisch dazu ausgebildet, eine Auswahl auf verschiedene Arten beziehungsweise unter Berücksichtigung unterschiedlicher Aspekte, auch mehrerer unterschiedlicher Aspekte gleichzeitig, zu treffen. So ist es möglich, die Kamera, in der gespeichert werden soll, durch eine Systemadministratorvorgabe zu bestimmen; eine solche nichtautomatische Bestimmung ist etwa dann sinnvoll, wenn das Gesamtsystem ohnehin komplett installiert wird und entsprechende Planungen von vorneherein berücksichtigt werden, etwa durch Auslegung der Netzwerktopologie, der Entfernung, die installierte Kameras zueinander aufweisen usw. Das Auswahlmittel kann weiter Gefährdungszonen berücksichtigen, in welchen die jeweiligen Überwachungskameras angeordnet sind. Dafür sind typisch Mittel in den Kameras vorgesehen, in denen eine Gefährdungszone vermerkt werden kann. Diese kann beispielsweise bei der Installation oder zu einem späteren Zeitpunkt vom Systemadministrator festgelegt werden. Auf diese Weise kann etwa berücksichtigt werden, dass etwa zwei Kameras, die andernfalls Daten eventuell wechselseitig speichern würden, beide im gleichen vandalismusgefährdeten Bereich angeordnet sind; in einem solchen Fall werden Daten besser an andere Kameras in weniger gefährdeten Bereichen übertragen. Gleiches gilt etwa in Lagerhäusern mit Brandgefährdung für Kameras, die nicht durch Brandschutzwände voneinander getrennte Räume überwachen. Die Berücksichtigung derartiger Gefährdungszonen ist insofern besonders vorteilhaft, weil diese womöglich nicht automatisch von einer Kamera festgestellt werden können, obwohl gegebenenfalls die bauliche Anpassung der Kamera an bestimmte Gefährdungen wie Explosionssicherheit, Vandalismussicherheit und dergleichen gegebenenfalls Hinweise darauf zu liefern vermag, welchen Gefährdungen eine Kamera ausgesetzt ist. Derartige, gegebenenfalls bei der Herstellung auf internen Speichern bereits vermerkte bauliche Besonderheiten einer Kamera können ebenfalls von den Mitteln zur Auswahl der Zielkamera berücksichtigt werden, und zwar als Hinweis auf die Anbringung in einer Gefährdungszone. Genannt seien Explosionsschutz, Vandalismusschutz, Wetterfestigkeit als wichtige bauliche Indizien, die in einem kameraeigenen Speicher vermerkt werden können.

Es kann weiter die Entfernung der Kamera zu anderen, über die Netzschnittstelle erreichbaren Kameras bei der Auswahl herangezogen werden. Dies ist als alleiniges Kriterium insbesondere dort sinnvoll, wo keine unterschiedlichen Gefährdungszonen vorliegen. Andernfalls kann eine gemischte Berücksichtigung unterschiedlicher, vorgenannter oder nachfolgend noch erörterter Kriterien erfolgen.

Die Entfernung zu anderen, über die Netzschnittstelle erreichbaren Kameras kann auf unterschiedliche Weise bestimmt werden. Zum einen können Kameras gegebenenfalls mit GPS-Sensoren ausgerüstet werden und die mit den internen GPS-Sensoren bestimmten Positionssignale ausgetauscht oder übertragen werden. Durch Bestimmung der Distanz zwischen den jeweiligen Standorten kann dann die Entfernung bei der Zielkameraauswahl gut berücksichtigt werden. Dies kann, muss aber nicht zwingend autark geschehen. Die Verwendung einer oder mehrerer zentraler Stellen zur Bestimmung der Entfernungen voneinander ist möglich.

Alternativ und/oder zusätzlich ist es möglich, im Netzwerk Laufzeiten von Datenpaketen zu anderen Kameras zu bestimmen und zur Entfernungsbestimmung heranzuziehen. Hierbei ist zu berücksichtigen, dass einerseits eine bestimmte Minimalentfernung wünschenswert ist, andererseits aber die Entfernung nicht so groß werden darf, dass zur Sicherung der Kamerabilder untereinander wiederum die eigentlich zu vermeidende

Überlastung von Netzwerkknoten auftritt. Es können daher insbesondere bei der Bestimmung der Zielkamera durch Datenpaketlaufzeiten auch weitere Informationen, insbesondere die durch herkömmliche Protokolltechniken in lokalen Netzwerken ohne weiteres bestimmbaren Routen herangezogen werden, um sicherzustellen, dass beispielsweise zwar ein oder zwei Switches beziehungsweise Router zwischen den Daten austauschenden Kameras liegen, was bei typischen Netzwerktopologien für eine hinreichende Entfernung spricht, andererseits aber eine Überlastung zentraler Knoten vermieden wird. Es sei darauf hingewiesen, dass es besonders bevorzugt ist, wenn gegebenenfalls die Auswahl einer oder mehrerer Zielkameras, die von einer gegebenen Kamera angesprochen werden, ausgehandelt wird mit anderen, im Überwachungssystem vorhandenen Kameras. Dazu kann beispielsweise iterativ zunächst unter Berücksichtigung eigener Kriterien und ohne Berücksichtigung der Datenspeicherungen von anderen Kameras auf dritten Kameras eine Auswahl gewünschter Zielkameras erfolgen. Die Überwachungskameras des Systems können dann untereinander austauschen, welche jeweiligen Kameras von anderen Kameras angesprochen werden sollen und es kann autark festgestellt werden, ob durch eine solche, rein lokale Vorgaben berücksichtigende Auswahl Netzabschnittsüberlastungen auftreten und/oder einzelne Kameras zu viele Daten von Fremdkameras erhalten. Für einen solchen Fall sind in hochkomplexen Systemen bevorzugt Arbitrierungsmittel beziehungsweise -mechanismen vorgesehen, die einerseits berücksichtigen, wie gut für eine Kamera neben der zunächst gewünschten Zielkamera weitere Fremdkameras erreichbar wären, auf denen ersatzweise eine Speicherung erfolgen könnte, und wie hoch die Gesamtbelastung für das Netz beziehungsweise eines gegebenen Knotens ist, wenn bestimmte Kameras ihre Daten auf gewünschten oder vorgegebenen Zielkameras einspeichern.

Es sei darauf hingewiesen, dass gegebenenfalls die über Datenpaketlaufzeiten und bei Datenpaketversendung (etwa durch "PING"-Anfragen) erhaltene Information benutzt werden kann, um die gesamte Netzwerktopologie oder zumindest lokale Teile davon zu bestimmen. Eine Auswahl der ansprechenden Kameras kann dann lokal durch eine einzelne Kamera jeweils für sich erfolgen und/oder es können auch für andere Kameras Bestimmungen festgelegt werden durch eine, sich in einen Administrator- beziehungsweise Supervisor- oder Mastermodus begebende Kamera. Dabei können in einer bevorzugten Ausführungsform alle Kameras eines Systems dazu fähig sein, gegebenenfalls eine Masterfunktion einzunehmen. Es sei darauf hingewiesen, dass dies insbesondere durch eine entsprechende Kameraprogrammierung möglich ist, wie dies auch für andere erfindungsgemäße Merkmale gilt.

Es ist möglich und bevorzugt, dass eine Prioritätenliste aufgebaut wird, in der die Reihenfolge der gewünschten Zielkameras vermerkt ist und gegebenenfalls ein Maß dafür hinterlegt ist, welchen Vorteil die einzelne, Videodaten sendende Kamera und/oder das Gesamtsystem durch die Berücksichtigung der jeweiligen Reihenfolge hat.

Es sei weiter darauf hingewiesen, dass es möglich und bevorzugt ist, die angesprochenen Informationen wiederholt zusammenzustellen, beispielsweise dann, wenn festgestellt wird, dass sich die Topologie des Netzwerks durch die Entfernung, den Defekt oder dergleichen einer einzelnen Kamera oder durch Hinzufügung einer weiteren oder mehrerer weiterer Kameras geändert hat. Um hier eine Netzstabilität zu gewährleisten, ist es bevorzugt, regelmäßig Informationen auszutauschen, was durch Abfrage nächster Nachbarn geschehen kann und gegebenenfalls dadurch, dass das Hinzukommen oder Fehlen von Kameras im Gesamtsystem durch einen Broadcast eines Hinweissignals an eine Vielzahl von Kameras oder alle Kameras vermeldet wird.

Es sei auch darauf hingewiesen, dass gegebenenfalls zusätzlich und/oder alternativ eine stochastische Auswahl unter mehreren Fremdkameras erfolgen kann. Dass sich im übrigen insbesondere stochastisch Fremdkameras zur Videodateneinspeicherung andienen können, sei erwähnt. Dies gilt vor allem in Überwachungsnetzen, in denen keine Sabotage zu befürchten ist oder in denen die Fremdkameras, von denen eine Andienung zur Videodatenspeicherung akzeptiert wird, zum Beispiel durch eine feste Topologie festlegbar sind.

Die stochastische Speicherung ergibt eine besonders hohe Sabotagesicherheit, da nicht ohne weiteres festgestellt werden kann, zu welcher Fremdkamera bestimmte Daten gesendet werden. Wenn Daten an mehrere Fremdkameras eingespeist werden, ist es besonders bevorzugt, den Abruf von Videodaten eines bestimmten Ereignisses zum Beispiel zwecks Auswertung in einer Zentrale durch Broadcast eines entsprechenden Anforderungssignals zu ermöglichen.

Es ist erfindungsgemäß nicht zwingend, dass die Einspeicherung von Videodaten in Fremdkameras kontinuierlich veranlasst wird. Es ist vielmehr möglich, eine eventbasierte Speicherung zu veranlassen und/oder eine eventbasierte Fremdkameraauswahl vorzunehmen. Bei den Ereignissen kann es sich zunächst um das simple Erreichen eines bestimmten Zeitpunkts handeln. In einem solchen Fall wird also mit der Einspeicherung von Videodaten abgewartet, zum Beispiel bis eine bestimmte Menge Videodaten aufgelaufen ist. Indem hier gegebenenfalls die Übertragungszeitpunkte zwischen unterschiedlichen Kameras geeignet bestimmt werden, wird vermieden, dass durch Übertragungsversuche in einem schon hoch ausgelasteten Netzwerk beziehungsweise Knoten zusätzlicher, nicht unmittelbar der sofortigen Speicherung dienender Datenverkehr auftritt. Darüberhinaus und/oder zusätzlich ist es möglich, die Einspeicherung von Videodaten zu bestimmten Ereignissen auszulösen. Dies kann beispielsweise der Fall sein, wenn mit der videodatenerzeugenden und an Fremdkameras Videodaten ausgebenden Überwachungskamera eine kritische Situation festgestellt wird, etwa ein auf einen Brand hindeutender Temperaturanstieg, ein durch automatische Videodatenermittlung erfasster Einbruch, oder ein durch andere Alarmsensoren wie Glasbruchsensoren festgestellter Einbruch. Es ist möglich, dass ein auslösendes Triggersignal oder mehrere maskierte Einzeltrigger gemeinsam dazu herangezogen werden, auch eine bestimmte Zeit vor oder nach einem aktivierenden Ereignis Videodaten abzuspeichern. Dies ermöglicht etwa dann, wenn eine Schaufensterscheibe einer längeren Schaufensterfront eingeschlagen wird, Bilder auch anderer Kameras, an denen der Täter womöglich kurz vorher vorbeigelaufen ist, noch abzuspeichern. Der Vor- beziehungsweise Nachlauf kann gegebenenfalls auch abhängig davon gewählt werden, welche Kamera ein Triggersignal ausgibt, etwa um die räumliche Entfernung zu dieser Kamera zu berücksichtigen. Es ist auch möglich, als aktivierendes Ereignis, auf welches hin Videodaten an Fremdkameras gespeist werden, das Eintreffen von Videodaten aus Fremdkameras heranzuziehen. Es sei darauf hingewiesen, dass das Auslösen der Einspeicherung von eigenen Videodaten in Fremdkameras sowohl über die Netzwerksschnittstelle entsprechend herkömmlicher Netzwerkprotokolle wie TCP/IP oder ähnlicher erfolgen kann, dass aber auch die Verwendung anderer Übertragungskanäle möglich ist, um das Abhören zu erschweren. Überdies ist es möglich, dass eine Kamera aufgrund selbst erfolgter oder mit kameranahen Sensoren bestimmter Ereignisse Frerndbilder von anderen Kameras anfordert, etwa von benachbarten Fremdkameras. Dies erleichtert später womöglich die Auswertung der zu einem gegebenen Ereignis gewonnen Daten und wird als für sich erfinderisch und schutzwürdig angesehen.

Es sei angemerkt, dass als "Fremdkamera" hier bevorzugt jedwede räumlich getrennt angebrachte andere Überwachungskamera verstanden wird, die über die Netzschnittstelle erreichbar ist.

Dies ist insbesondere dann besonders sinnvoll, wenn wenigstens eine Kamera zusätzlich mit einem Alarmsensor wie einem Brandmelder, einer Einbruchsalarmanlage usw. verbunden ist und in solchen Fällen bestimmt werden muss, ob relevante Videodaten von anderen Kameras erfasst wurden. Es kann im übrigen vorgesehen werden, auch bei Vorliegen einer per se relevanten Situation mit dem Einspeichern von Videodaten in Fremdkameras noch zu warten, insbesondere dann, wenn auf Grund des aktivierenden Ereignisses mit einer hohen Netzlast gerechnet werden muss, etwa weil bei einem beginnenden Brand sämtliche Videodaten aus den in der Brandzone angeordneten Kameras zunächst schnellstmöglich gesichert werden müssen, so dass außerhalb der Brandzone befindliche Kameras mit der Speicherung ihrer eigenen Bilder in fremde Kameras bevorzugt warten. Dies zeigt, dass es als erfindungsgemäß vorteilhaft angesehen wird, wenn das Speichermittel zur zeitversetzten Einspeicherung und/oder zu einer die Netzauslastung berücksichtigenden Einspeisung ausgebildet ist. Dass im übrigen bevorzugt komprimierte Daten zum Speichern übertragen werden, wobei zur Komprimierung per se bekannte Verfahren verwendet werden können, sei erwähnt; erwähnt seien zum Beispiel die Frameratenverringerung und/oder die Auflösungsverringerung und/oder die Reduktion auf besonders relevante Bereiche.

Es ist im übrigen möglich und, insbesondere in Hochsicherheitssystemen, auch deutlich bevorzugt, zu einem Ereignis gehörende Videodaten an mehrere, über die Netzwerkschnittstelle ansprechbare Fremdkameras zu Sicherungszwecken zu übertragen.

Bevorzugt ist das Speichermittel dazu ausgebildet, Bilder von anderen Kameras nur befristet zu speichern und/oder Videodaten zyklisch zu überschreiben. Dies stellt sicher, dass zu alte Videodaten in einem Speicher einer Kamera mit zu hohem Speicher-Füllstand einer Neueinspeicherung nicht entgegenstehen. Typisch und bevorzugt wird der zyklisch zu überschreibende Speicherbereich einer Fremdkamera während der Aushandelphase fest zugeordnet, das heißt, es kann von vorneherein abgeschätzt bzw. festgelegt werden, wie alt Daten im Speicher vor zyklischem Überschreiben werden beziehungsweise wann sie gelöscht werden sollen. Bevorzugt sind aber insbesondere dann, wenn die Speichermittel dazu ausgebildet sind, Videodaten zyklisch zu überschreiben, Warnmittel vorgesehen, um einen Systemadministrator oder dergleichen darauf hinzuweisen, falls in unerwarteter Weise sehr kurz hintereinander sehr viele Daten eintreffen. Auf diese Weise kann zum Beispiel ein Sabotageakt bemerkt werden, durch welchen ein Kameraspeicher mit per se relevanten Daten zum Beispiel durch Einschreiben weniger relevanter Daten "ausgespült" werden soll. Dass gegebenenfalls auch eine Einspeicherung bevorzugt dann verhindert wird, falls ein solches oder ähnliches irreguläres Übertragungsmuster auftritt, sei erwähnt. Dazu kann zum Beispiel festgelegt werden, wie viele Daten in einem bestimmten Zeitraum eintreffen dürfen, das heißt es kann eine kritische Schwelle festgelegt werden.

Es sei darauf hingewiesen, dass es bevorzugt ist, eingespeicherte Bilder unter Angabe der bildgebenden Kamera und/oder unter Vermerk eines die Bildspeicherung auslösenden Ereignisses und/oder unter der Bildaufnahme- beziehungsweise Bildeinspeicherungszeit einzuspeichern, und zwar so, dass gegebenenfalls auch ein Abruf unter Angabe dieser Kennungen erfolgen kann, etwa durch Broadcast. Ein solches Broadcastsignal kann insbesondere von einer Zentrale, das heißt einem dort vorgesehenen Server oder einem in der Zentrale befindlichen Benutzer ausgesendet werden. In Fällen, in denen eine besonders hohe Abhör- bzw. Sabotagesicherheit erforderlich ist, kann eine derartige Abfrage bevorzugt verschlüsselt versandt werden. Weiter können gegebenenfalls eigene festgestellte Ereignisse protokolliert werden und/oder es kann mitprotokolliert werden, an welche Fremdkameras (und gegebenenfalls wann) Bilder ausgegeben wurden.

Die Erfindung wird im Folgenden nur beispielsweise an Hand der Zeichnung beschrieben. In dieser ist dargestellt durch:

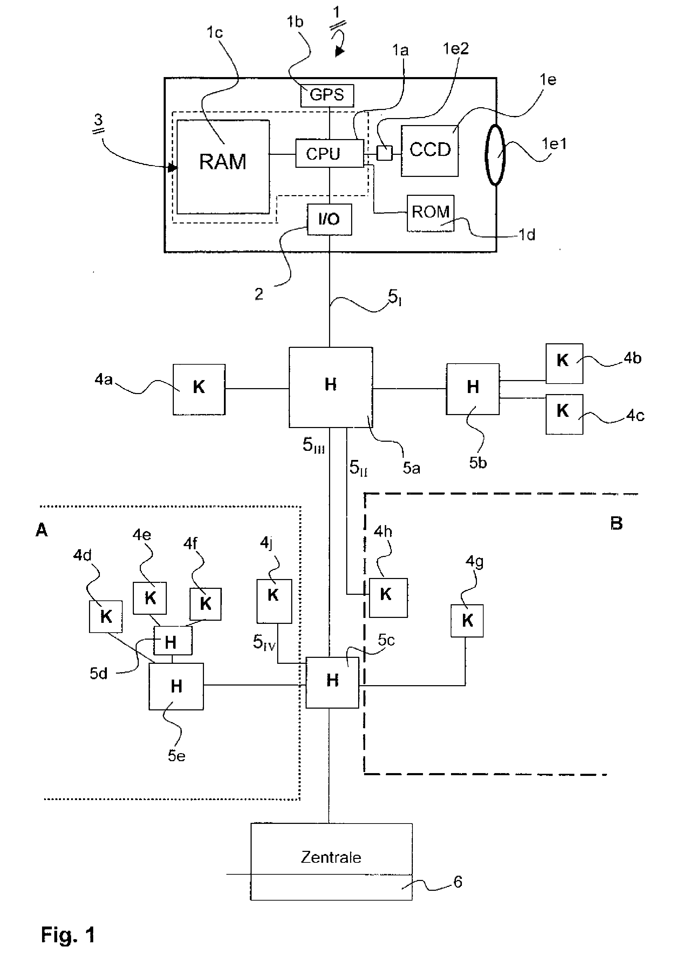

- Fig. 1: eine Überwachungskameraanordnung gemäß der vorliegenden Erfindung.

Nach Fig. 1 umfasst eine allgemein mit 1 bezeichnete Überwachungskamera 1 eine Netzschnittstelle 2 und ein Speichermittel 3 zur Speicherung von Videodaten innerhalb einer Kamera, wobei das Speichermittel 3 zur Einspeicherung zu speichernder Videodaten in mindestens einer anderen, über die Netzschnittstelle 2 erreichbaren Kamera 4 oder für über die Netzschnittstelle 2 von zumindest einer anderen Kamera 4a-4j empfangene Videodaten ausgebildet ist.

Die Kamera 1 ist im vorliegenden Ausführungsbeispiel eine Videokamera, die einen kontinuierlichen Strom hochaufgelöster Videodaten zu liefern vermag, und zwar an ein Netzwerk 5 über die Netzwerkschnittstelle 2. Die Kamera 1 weist eine CPU 1a, einen GPS-Sensor 1b, einen Speicher für wahlfreien Zugriff, wie RAM 1c, einen Flashspeicher, beispielsweise einen SD-Kartenspeicher usw., sowie einen nicht veränderbaren Speicher ROM 1d auf. Der Speicher 1c für wahlfreien Zugriff kann als von außen wechselbarer Speicher realisiert sein, beispielsweise als Speicherkarte, zum Beispiel als SD-Karte. Die Verwendung von SD-Karten ist besonders dort sinnvoll, wo Videodaten gegen Stromunterbrechungen gesichert gespeichert werden sollen. Hieraus folgt, dass neben SD-Karten auch andere Speichertechnologien, auch zukünftige, in Frage kommen, die die Eigenschaft der Stromunterbrechungssicherheit besitzen.

Weiter ist ein CCD-Sensor 1e mit zugehöriger Optik 1e1 und einer entsprechenden Signalkonditionierungsschaltung 1e2 vorgesehen, die gemeinsam digitale Videodaten erzeugen und an die CPU speisen.

Es sei darauf hingewiesen, dass die Fremdkameras 4a-4j, die exemplarisch dargestellt sind, hier einen internen Aufbau identisch jenem der Überwachungskamera 1 aufweisen und insoweit eine andere Bezugszahl nur gewählt wurde, um eine leichtere Unterscheidung zwischen einer ersten Überwachungskamera 1 und den weiteren Kameras 4 im Netzwerk zu erleichtern; deswegen werden die Kameras 4 auch als "Fremdkameras" bezeichnet.

Die Kameras sind zudem dazu ausgelegt, bestimmte Ereignisse an die Zentrale zu übermitteln, beispielsweise das Erfassen erhöhter Temperaturen, wie dies durch (in der Figur nicht dargestellte) Temperatursensoren erfassbar ist, Erschütterungen, die auf einen Sabotageversuch hindeuten, durch Bildauswertung, beispielsweise in ansonsten leeren Bereichen erfasste Bewegungen, ermittelte Ereignisse usw., und es sei darauf hingewiesen, dass die Zentrale dazu ausgebildet sein kann, Bilder von Überwachungskameras zyklisch und/oder im Falle eines solchen Ereignisses automatisch auf einem oder bestimmten Monitoren anzuzeigen.

Weiter ist die Zentrale bevorzugt dazu ausgebildet, derartige Ereignisse zu archivieren.

Die Netzwerkschnittstelle 2 ist im vorliegenden Fall dazu ausgebildet, über ein Standardnetzwerk mit Gegenstellen zu kommunizieren. Dies kann über TCP/IP-Protokolle oder dergleichen geschehen. Dass im übrigen eine Verbindung mit anderen Kameras über unterschiedliche Kommunikationskanäle und -wege, beispielsweise simultan über LAN, WLAN und UTMS möglich ist, sei erwähnt.

Im dargestellten Ausführungsbeispiel ist das Netzwerk 5 als festverdrahtetes Netzwerk dargestellt, das eine Vielzahl von Hubs 5a-5e aufweist, die untereinander über Leitungen kommunizieren, wie auch die Kameras mit den Hubs über feste Leitungen kommunizieren. An den Hub 5c ist hier eine Überwachungszentrale 6 angeschlossen, in der Bilder aus den verschiedenen Überwachungskameras 1, 4a-4j zusammenlaufen.

Die Netzwerkschnittstelle 2 ist dazu ausgelegt, Bilder nicht nur an die Zentrale zu übertragen, sondern zu Sicherungszwecken für die Ablage im Speicher für wahlfreien Zugriff anderer Kameras 4a-4j auch an diese Kameras nach Auswahl derselben, wie nachfolgend beschrieben werden wird.

Die Überwachungskamera 1 ist weiter in der Lage, die Signale des kameraeigenen GPS-Sensors an andere Kameras zu übertragen. Die Netzwerkschnittstelle 2 ist in Zusammenwirkung mit der CPU 1a dazu ausgebildet, die Laufzeit eines Datenpakets zu anderen, im Netzwerk identifizierten Überwachungskameras und zurück zu ermitteln, beispielsweise über einen PING-Prozess, und dabei auch den von den Datenpaketen genommenen Weg, insbesondere die Anzahl der bis zur jeweils angesprochenen Fremdkamera 4a-4j durchlaufenen Router zu ermitteln. Die Laufzeit ist ein Maß für die Entfernung zwischen den Kameras unter Berücksichtigung einer gegebenen Netzlast, da gegebenenfalls sehr hohe Netzlasten auf einem Netzwerkabschnitt dazu führen können, dass die Übertragung eines Datenpakets länger dauert. So wird beispielsweise einzuschätzen sein, dass in Fig. 1 die Datenlaufzeit hin und zurück zwischen der Überwachungskamera 1 und der Überwachungskamera 4j länger sein wird als die Datenlaufzeit zwischen der Überwachungskamera 1 und der Überwachungskamera 4h. Der Grund hierfür ist, dass Daten aus der Überwachungskamera 1 zur Überwachungskamera 4h lediglich einen Hub 5a durchlaufen müssen und die Netzabschnitte 5I, 5II jeweils nur mit Daten einer einzelnen Kamera belastet sind, während über den Netzleitungsabschnitt 5III Signale der Kameras 4a, 4b, 4c und 1 übertragen werden müssen und der Hub 5c als der Hub, der der Zentrale 6 am nächsten ist, den gesamten Netzwerkverkehr übertragen muss. Auch wenn damit die Länge der Datenleitung 511 etwa der Summe der Datenleitungslängen 5III plus 5IV entspricht, wird damit, gleiche Hubs etc. unterstellt, ein Datenpaket zwischen Kamera 1 und Kamera 4h schneller ausgetauscht als zwischen Kamera 4j und Kamera 1, da Datenpakete nicht so lange warten müssen, bis die Netzleitungen für die Übertragung zur Verfügung stehen beziehungsweise sich die Übertragungskanäle nicht teilen müssen.

Die Überwachungskameras 1, 4a-4h sind dazu ausgebildet, die Datenlaufzeiten zu jeweils benachbarten Kameras zu tabellieren und die entsprechenden Tabellen danach untereinander auszutauschen. Auf diese Weise hat jede Überwachungskamera, wie bevorzugt möglich, in der hier beschriebenen Ausführungsform Informationen über die Netzwerktopologie zur Verfügung.

Die Überwachungskameras 1, 4a-4h sind überdies in unterschiedlichen Bereichen, in der Fig. 1 markiert als A, B, C angeordnet. Dabei kann Zone A beispielsweise ein brandgefährdetes Warenlager sein, Zone B ein Bürotrakt und Zone C ein Außengelände. Die jeweils in den unterschiedlichen Zonen angeordneten Kameras sind baulich entsprechend angepasst. So sind die Kameras 4d, 4e, 4f, 4j explosionsgeschützt aufgebaut, was entsprechende, dem Fachmann per se bekannte bauliche Ausgestaltungen der Kameras erfordert. Die Kameras 1, 4a, 4b, 4c in der Außenzone C sind wetterfest ausgebildet, während die im Büro- und Eingangsbereich B vorgesehenen Kameras 4h, 4g keine besonderen Schutzmaßnahmen benötigen. Die entsprechende Gehäuseausführung, das heißt Brandsicherheit, Wetterfestigkeit usw. sind im reinen Lesespeicher ROM 1d jeder Kamera zusammen mit anderen Informationen, insbesondere dem Betriebssystem der Kamera, fest hinterlegt.

Die Kameras sind dazu angeordnet beziehungsweise programmiert, auf den Empfang eines die Netzwerkstruktur ermittelnden Datenpaketes die entsprechende Information an die sendende Kamera zu übertragen und die sendende Kamera ist dazu ausgebildet, diese zurückerhaltene Information mitzutabellieren. Die Kameras 1 bis 4h sind überdies dazu ausgelegt, die von ihren GPS-Sensoren erfassten Standortsignale an andere Kameras zu übertragen und auch diese Signale werden mitabgelegt.

Der Speicher für wahlfreien Zugriff ist so angeordnet, dass einerseits die tabellierte Netzwerkinformation, das heißt die Entfernung und bauliche Ausgestaltung ermittelter Fremdkameras abgelegt werden kann, was angesichts der Möglichkeit der Ablage in codierter Form auch bei großen Netzwerken ohne übermäßig großen Speicherbedarf möglich ist; allerdings sei auf die Möglichkeit verwiesen, gegebenenfalls nur Netzwerkteile abzuspeichern; falls erforderlich, kann eine Auswahl der Fremdkameras, die zu tabellieren sind, erfolgen unter Berücksichtigung nicht zu großer Laufzeiten, aber unterschiedlicher Gefährdungszonen und räumlicher Zugehörigkeit weit entfernten Kameras.

In der Zentrale 6 laufen die Signale aus allen Kameras zusammen und können auf Monitoren dargestellt werden sowie gegebenenfalls auch gespeichert werden. Es ist möglich, in der Zentrale weniger Monitore zur Verfügung zu stellen als Überwachungskameras im Netzwerk vorgesehen sind, und zyklisch, stochastisch oder nach anderen Kriterien unter jeweils darzustellenden Kameras auszuwählen. Es ist nicht erforderlich, sämtliche Bilder aller Kameras permanent an die Kamera zu senden oder dort permanent zu archivieren.

Die Kameras sind überdies mit synchronisierten Zeitgebern versehen, die mit den jeweiligen Bildern mitübertragen werden und/oder mit diesen abgelegt werden können.

Der Speicher 3 für wahlweisen Zugriff umfasst einen Bereich zum Ablegen der mit dem kameraeigenen Bildgeber erfassten Bilder sowie zum Ablegen von aus Fremdkameras erhaltenen Bildern unter Vermerk der jeweiligen bildgebenden Kamera, eines die Bildübertragung von der Fremdkamera auslösenden Ereignisses wie Standardeinspeicherung, zu hoher Temperatur, Erschütterung usw. und der entsprechenden Zeitmarken bei Bildaufnahme und es ist eine datenbankartige Tabelle oder dergleichen vorgesehen, in der gespeichert ist, welche Videodaten zu welchen Ereignissen oder Zeiten zuzuordnen sind.

Die Zentrale 6 ist weiter dazu ausgebildet, Daten nicht nur im Wege der Punkt-zu-Punkt-Kommunikation zwischen Kameras und der Zentrale zu übertragen, sondern gegebenenfalls auch Informationen zu bestimmten Ereignissen, wie erhöhten Temperaturen, Sabotageversuchen und dergleichen beziehungsweise zu Zeiträumen, in denen solche Ereignisse aufgetreten sind, durch Aussendung eines Broadcast-Signals an alle Kameraeinheiten anzufordern und die darauf von verschiedenen Kameras auf eine solche Anfrage hin einlaufenden Informationen zu sammeln und zusammenzustellen, so dass nach Eintreffen aller Daten zu einem bestimmten Ereignis von allen Kameras die entsprechenden Videodaten vorliegen. Dass gegebenenfalls ein Broadcast nur an bestimmte Kameras beziehungsweise Kameragruppen gesendet werden kann, sei erwähnt. So ist es etwa sinnvoll, bei Auftreten einer erhöhten Temperatur in einer brandgefährdeten Zone einerseits Bilder von allen Kameras in der jeweiligen Gefährdungszone abzurufen, also im Beispiel der Brandgefährdungszone A von den Kameras 4d, 4e, 4f, 4j und gegebenenfalls auch aus dem Außenbereich um eine brandgefährdete Halle herum, so dass ein Broadcast die Kameras 1, 4a, 4b, 4c sowie 4d, 4e, 4f und 4j ansprechen muss, nicht aber die Kameras aus dem Bürobereich.

Die Anordnung wird verwendet wie folgt:
Zunächst wird das Netzwerk 5 aufgebaut und die Kameras 1 und 4a-4j montiert sowie die Zentrale in Betrieb genommen.

Nach Aktivschaltung aller Kameras tauschen die Kameras zunächst untereinander Datenpakete aus, um die durch GPS-Signale und Datenpaketlaufzeiten erfassten Abstände untereinander zu ermitteln und die in einem Netzwerk erreichbaren Kameras zu bestimmen. Aus den so erhaltenen Informationen werden Tabellen von jeder Kamera aufgebaut. Diese Tabellen werden wiederum ausgetauscht, so dass nach Durchführen dieses Austausches jede Kamera Informationen darüber hat, welche anderen Kameras im Netz vorliegen, wie weit diese Kameras vom eigenen Standort entfernt sind und wie nahe sich andere Kameras wiederum an dritten Kameras befinden. Es sei darauf hingewiesen, dass die entsprechenden Informationen über Datenpaketaustausch gegebenenfalls erfordern, dass das Überwachungskamerasystem unter Betriebsbedingungen arbeitet, das heißt abweichend von der vorstehenden Beschreibung tatsächlich bereits ein Betrieb erfolgt. Wenn ein intensiver Datenaustausch von Videodaten zur Speicherung in den kamerainternen Speichern für wahlfreien Zugriff von anderen Kameras erfolgen soll und die Netzwerkinfrastruktur dadurch ebenfalls spürbar belastet ist, kann es sinnvoll sein, die entsprechenden Bestimmungen zu wiederholen, sobald das Netz vollständig oder näherungsweise unter den üblichen Betriebsbedingungen arbeitet. Dies kann durch wiederholte Messung der Ansprechzeiten oder dergleichen geschehen, beispielsweise iterativ.

Es wird dann, nach Aufbau der Tabellen über die Entfernung der eigenen Kamera zu Fremdkameras und dem Austausch der entsprechenden Tabellen, festgelegt, welche der im Netzwerk ermittelten Kameras für die Speicherung der eigenen Bilder in Betracht kommt. So wird eine Prioritätenliste der verfügbaren Fremdkameras erstellt, wobei einer gegebenen Fremdkamera gemäß dem möglichst großen räumlichen Abstand bei möglichst geringer Datenlaufzeit und der Anordnung in einer anderen, möglichst ungefährdeten Zone eine hohe Priorität zugeordnet wird, während nur über langsame Verbindungen erreichbare Fremdkameras, die zudem nahe und in derselben Gefährdungszone liegen, eine geringe Priorität erhalten.

Es kann dann unter den Kameras ausgetauscht werden, welche jeweiligen Fremdkameras von anderen Kameras in Betracht gezogen werden und es kann gegebenenfalls im Vorfeld bereits eine Korrektur erfolgen, wenn sich etwa herausstellt, dass bestimmte einzelne Kameras ebenfalls von sehr vielen dritten Kameras Videodaten erhalten würden.

Nachdem auf diese Weise die jeweiligen, zur Sicherheitsdatenspeicherung heranzuziehenden Fremdkameras bestimmt worden sind, kann die eigentliche Überwachung beginnen. Dabei werden, wie erforderlich, Videodaten an die Zentrale 6 gespeichert und im übrigen kontinuierlich ein Videodatenstrom im eigenen Speicher für wahlfreien Zugriff der jeweiligen Kameras abgelegt. Zugleich wird entsprechend der Prioritätenliste mindestens eine Kamera ausgewählt, an welche die Bilder ebenfalls zu Sicherungszwecken übertragen werden. Diese Kamera kann unter den priorisierten Kameras stochastisch oder zyklisch variiert werden, so dass nicht alle Sicherungsbilder einer Kamera kontinuierlich im kamerainternen Speicher für wahlfreien Zugriff ein und derselben Fremdkamera abgelegt werden. Auf diese Weise wird kontinuierlich während des Betriebs ein Sicherungsvideodatenstrom aus einer Überwachungskamera an eine oder mehrere Fremdkameras zur dort kamerainternen Speicherung ausgegeben und kameraintern in den Fremdkameras abgelegt. Eine Belastung der Zentrale mit den Sicherungsdaten oder zentralennaher Knoten, wie hier beispielsweise des Hubs 5c, ist dabei nicht zu befürchten.

Es ist möglich, die in Fremdkameras zu sichernden Videodaten nicht kontinuierlich auszugeben, sondern sequentiell. So kann etwa für einen kurzen Zeitraum wie eine Minute eine Zwischenspeicherung erfolgen und dann die während dieser Zeit aufgelaufenen und bevorzugt bereits bestimmten Zielkameras zugewiesenen Videodaten an diese blockweise übertragen werden. Dies kann die Kommunikation durch das dann streamingartige Wegschreiben weiter begünstigen. Es ist möglich, in Fällen, in denen mit den Kameras zum Beispiel durch darin vorgesehene Sensoren oder durch Bildauswertung bestimmte Ereignisse erfasst werden, eine Sofortspeicherung zu veranlassen und/oder zusätzlich auch noch in anderen Fremdkameras als bereits zuvor zu speichern, um die Gesamtdatensicherheit des Systems zu erhöhen.

Wenn eine Kamera von Fremdkameras Daten empfängt, werden diese einerseits im kamerainternen Speicher für wahlfreien Zugriff abgelegt und andererseits ein entsprechender Vermerk in einer Filetabelle des Speichers für wahlfreien Zugriff beziehungsweise einer Datenbank abgelegt, auf welchen Zeitpunkt, welche Kamera beziehungsweise welche bildspeicherungsauslösenden Ereignisse sich die Videodaten aus den Fremdkameras beziehen.

Wenn dann zu einem bestimmten Ereignis oder für einen bestimmten Zeitraum Bilder aus einer Überwachungskamera benötigt werden, kann von der Zentrale an diese Kamera ein entsprechendes Signal gesandt werden. Sofern die Kamera die Videodaten übermittelt und keine Zweifel an der Echtheit der abgespeicherten Videodaten bestehen, ist eine Anfrage bei weiteren Kameras, an welche die angefragte Kamera ihre Videodaten gespeichert hat, nicht erforderlich und wird nicht durchgeführt. Bestehen jedoch Zweifel an der Authentizität der aus dem eigenen Speicher für wahlfreien Zugriff der Kamera abgerufenen Videodaten oder lassen sich diese Videodaten, zum Beispiel auf Grund eines Kameradefekts, gar nicht abrufen, kann ein Broadcast-Signal an alle Kameras des Überwachungssystems gesandt werden und die entsprechenden Videodaten aus den dort abgelegten Speichern abgerufen werden. Dies kann gegebenenfalls auch regelmäßig zu Kontrollzwecken geschehen, wobei dann automatisch überprüft werden kann, ob das in einer Überwachungskamera selbst eingespeicherte Bild und alle in fremdkamerainternen Speichern abgespeicherten entsprechenden Bilder, die zu einem bestimmten Zeitpunkt aufgenommen wurden, miteinander übereinstimmen. Ist dies nicht der Fall, kann ein Warnsignal ausgegeben werden, um auf einen Sabotageversuch oder eine Datenkorruption hinzuweisen.

Wenn bei einer Kamera im Laufe des Betriebs der Speicher vollläuft, kann, insbesondere ab einer bestimmten Grenzschwelle, ein Signal an videodatenübermittelnde Fremdkameras ausgegeben werden und/oder die Zentrale informiert werden, insbesondere, sofern die den eigenen Speicher füllenden Videodaten noch nicht sonderlich alt sind. Es kann so veranlasst werden, dass entweder eine Speicherung in der Zentrale erfolgt und damit der eigene Speicher wieder freigegeben werden kann, und zwar vor Erreichen seines Füllstandes, und/oder dass die Videodaten sendenden Fremdkameras eine entsprechende Umpriorisierung vornehmen und statt der Kamera mit sich der Maximalfüllung näherndem eigenem Speicher stattdessen andere Fremdkameras zu Videodatensicherungszwecken ansprechen.

Es sei darauf hingewiesen, dass es durch die Möglichkeit, Videodaten von anderen Kameras zu Speicherzwecken anzufordern, ausreichen kann, einzelne erfindungsgemäße Kameras in einem Überwachungssystem anzuordnen, um insgesamt eine erhöhte Sicherheit ohne übermäßige Netzlast zu erhalten. Dies erleichtert die Nachrüstung bestehender Systeme.

## Patentansprüche

1. System mit
einer Mehrzahl an Kameras,
von denen
zumindest eine
eine Überwachungskamera mit einer Netzschnittstelle und einem Speichermittel zur kamerainternen Videodatenspeicherung ist,
und von denen
mehrere andere Kameras über die Netzschnitstelle zur Einspeicherung von zu speichernden Videodaten aus der zumindest einen Überwachungskamera erreichbar sind,
wobei ein
weiteres
Speichermittel zur Einspeicherung zu speichernder Videodaten in zusätzlich zumindest einer Kamera der mehreren anderen, über die Schnittstelle erreichbaren Kameras des Systems ausgebildet ist, und wobei
ein Auswahlmittel zur Auswahl der zumindest einen anderen, über die Netzschnittstelle erreichbaren Kamera unter den mehreren anderen erreichbaren Kameras vorgesehen ist,
eine Auswahl zu treffen, welche
der zumindest einen anderen,
über die Netzschnittstelle erreichbaren Kamera
unter den mehreren anderen erreichbaren Kameras Speichermittel zur Einspeicherung zu speichender Videodaten der mindestens einen Überwachungskamera zur Verfügung stellt, **dadurch gekennzeichnet, dass** das Auswahlmittel zumindest eines von
Gefährdungszonen, in welcher
die über die Netzschnittstelle erreichbaren mehreren anderen Kameras und
die zumindest eine Überwachungskamera angeordnet sind,
durch Round-Trip-Zeiten von Datenpaketen bestimmten Entfernungen zu den mehreren anderen, über die Netzschnittstelle erreichbaren Kameras,
mit GPS-Sensoren in Kameras bestimmte Entfernungen zu den mehreren anderen,
über die Netzschnittstelle erreichbaren Kameras, bei der Auswahl berücksichtigt.

2. System nach einem der vorhergehenden Ansprüche, **dadurch gekennzeichnet, dass** d i e Speichermittel zur Einspeicherung von Videodaten dazu ausgebildet sind Videodaten
eventbasiert einzuspeichern,
bevorzugt im Ansprechen auf ein von zumindest einer anderen, über die Netzschnittstelle verbundenen Kamera empfangenes Triggersignal mit Vor- und/oder Nachlauf zu einem aktivierenden Event.

3. System nach einem der vorhergehenden Ansprüche, **dadurch gekennzeichnet, dass** die Speichermittel zur netzlastabhängigen Einspeicherung von Videodaten ausgebildet sind.

4. System nach einem der vorhergehenden Ansprüche, **dadurch gekennzeichnet, dass** das Speichermittel der zumindest einen Überwachungskamera dazu ausgebildet ist, zu einem Ereignis gehörende Videodaten an mehrere,
zur Einspeicherung vorgesehene,
über die Netzschnittstelle ansprechbare
Kameras zu übertragen
und/oder
von mehreren.
über die Netzschnittstelle ansprechbaren
Kameras zu empfangen.

5. System nach einem der vorhergehenden Ansprüche, **dadurch gekennzeichnet, dass** das weitere
Speichermittel dazu ausgebildet ist, die über die Netzschnittstelle von zumindest einer Überwachungskamera
empfangenen Videodaten nur eine befristete Zeit zu speichern oder
zyklisch zu überschreiben.

6. System nach einem der vorhergehenden Ansprüche, dadurch gekennzeichet, dass das weitere Speichermittel dazu ausgebildet ist,
gespeicherte Videodaten dermmindest einen bildgebenden Überwachungskamera
abzuspeichern
und auf Anforderung selektiv alle von einer bestimmten bildgebenden stammenden Überwachungskamera Videodaten auszugeben.

## Claims

1. A system comprising
several cameras
of which
at least one
is a surveillance camera having a network interface and storage means for video data storage within the camera,
and of which
several other cameras are accessible via the network interface for storing video data to be stored from the at least one surveillance camera,
wherein a
further storage means is designed for storing video data to be stored additionally in at least one camera of the several other cameras of the system accessible via the interface,
and wherein
selection means are provided for selecting the at least one other camera accessible via the network interface among the several other accessible cameras,
to select which
of the at least one other camera
accessible via the network interface
among the plurality of other accessible cameras
provides storage means for storing video data to be stored of the at least one surveillance camera, **characterised in that** the selection means takes into consideration in the selection
at least one of
hazard zones in which
the several other cameras and
the at least one surveillance camera
are arranged via the network interface,
distances determined by round trip times of data packets
to the several other cameras
accessible via the network interface,
distances determined by GPS sensors in cameras to the several others cameras accessible via the network interface.

2. The system according to one of the preceding claims, **characterised in that** the storage means for storing video data are designed
for storing video data
in an event-based manner,
preferably in response to a trigger signal received from at least one other camera connected via the network interface with lead and/or lag with respect to an activating event.

3. The system according to one of the preceding claims, **characterised in that** the storage means are designed for network-load-dependent storage of video data.

4. The system according to one of the preceding claims, **characterised in that** the storage means of the at least one surveillance camera are designed for transmitting video data belonging to an event
to several cameras
provided for storage,
addressable via the network interface
and/or
receiving video data
from several cameras
addressable via the network interface.

5. The system according to one of the preceding claims, **characterised in that** the further storage means is designed for storing video data received from at least one surveillance camera via the network interface only for a fixed time and/or overwriting video data cyclically.

6. The system according to one of the preceding claims, **characterised in that** further storage means are designed for
storing stored video data from the at least one imaging surveillance camera and for selectively outputting on request all video data from a certain imaging surveillance camera.

## Revendications

1. Système, comprenant une pluralité de caméras, dont au moins une est une caméra de surveillance pourvue d'une interface réseau et d'un moyen de mémorisation pour le stockage de données vidéo à l'intérieur de la caméra, et dont plusieurs autres sont accessibles via l'interface réseau pour le stockage de données vidéo à mémoriser de la ou des caméras de surveillance,
où
un autre moyen de mémorisation pour le stockage de données vidéo à mémoriser est réalisé de manière complémentaire dans au moins une caméra de la pluralité d'autres caméras du système accessibles via l'interface réseau,
et où
il est prévu un moyen de sélection pour la sélection de l'autre ou des autres caméras de la pluralité d'autres caméras accessibles via l'interface réseau, permettant de sélectionner laquelle des caméras de la pluralité d'autres caméras accessibles via l'interface réseau dispose de moyens de mémorisation pour le stockage de données vidéo à mémoriser de la ou des caméras de surveillance, **caractérisé en ce que** le moyen de sélection d'au moins une des zones à risque où sont disposées la pluralité d'autres caméras accessibles via l'interface réseau et la ou les caméras de surveillance, tient compte pour la sélection de distances déterminées par le temps aller-retour de paquets de données à la pluralité d'autres caméras accessibles via l'interface réseau, au moyen de capteurs GPS dans les caméras accessibles via l'interface réseau.

2. Système l'une des revendications précédentes, **caractérisé en ce que** les moyens de mémorisation pour le stockage de données vidéo sont prévus pour sauvegarder les données vidéo sur la base d'événements, préférentiellement en réaction à un signal de déclenchement reçu d'au moins une autre caméra reliée via l'interface réseau avec retard et/ou avance par rapport à un événement actif.

3. Système selon l'une des revendications précédentes, **caractérisé en ce que** les moyens de mémorisation sont prévus pour le stockage de données vidéo dépendamment de la charge du réseau.

4. Système selon l'une des revendications précédentes, **caractérisé en ce que** le moyen de mémorisation de la ou des caméras de surveillance est prévu pour transmettre des données vidéo associées à un événement à plusieurs caméras prévues pour le stockage, activables via l'interface réseau, et/ou pour recevoir celles-ci de plusieurs caméras activables via l'interface réseau.

5. Système selon l'une des revendications précédentes, **caractérisé en ce que** l'autre moyen de mémorisation est prévu pour ne stocker que pendant un temps limité ou pour écraser cycliquement les données vidéo reçues d'au moins une caméra de surveillance via l'interface réseau.

6. Système selon l'une des revendications précédentes, **caractérisé en ce que** l'autre moyen de mémorisation est prévu pour stocker les données vidéo mémorisées de la ou des caméras de surveillance de visualisation, et à sortir sélectivement sur demande toutes les données vidéo provenant d'une caméra de surveillance de visualisation définie.
